Europäisches Patentamt

European Patent Office

Office européen des brevets

(11) Publication number: **0 421 000 A1**

## (12) EUROPEAN PATENT APPLICATION

(21) Application number: 89118216.4

(22) Date of filing: **02.10.89**

(51) Int. Cl.5: **B60B 7/14**, F16B 2/06

(43) Date of publication of application:
**10.04.91 Bulletin 91/15**

(84) Designated Contracting States:
**AT BE CH DE ES FR GB GR IT LI LU NL SE**

(71) Applicant: **Hsu, Long Chuan**
**No 156,Sec.4, Hsi Men Road**
**Tainan City(TW)**

(72) Inventor: **Hsu, Long Chuan**
**No 156,Sec.4, Hsi Men Road**
**Tainan City(TW)**

(74) Representative: **Casalonga, Axel et al**
**BUREAU D.A. CASALONGA - JOSSE**
**Morassistrasse 8**
**W-8000 München 5(DE)**

(54) **Fastening bracket for wheel cap.**

(57) A fastening bracket for wheel cap including a locking seat (12 or 42) with screw threading provided on its central surface and with a locking ring (11 or 41) provided at each end. The fastening bracket (1 or 4) is formed with a brace strip (14 or 44) to reinforce the structure.

FIG. 1

# FASTENING BRACKET FOR WHEEL CAP

This invention relates generally to fastening bracket for wheel cap, and more particularly, a fastening bracket for wheel cap in various sizes.

To ornament a vehicle with wheel caps is already well-known in the art. In addition to to being decorative, wheel caps protect the car wheels and the hubs from contamination by dirt or slurry.

Conventional wheel caps have the problem of achieving quick and convenient yet rigid engagement with the wheel body. To solve this problem, various fastening tools for wheel caps have been developed to meet the need of the market. However, none of these fastening tools have been satisfactory in attaining the intended functions. Furthermore, the size of the fixing bolts for different vehicles may be different.

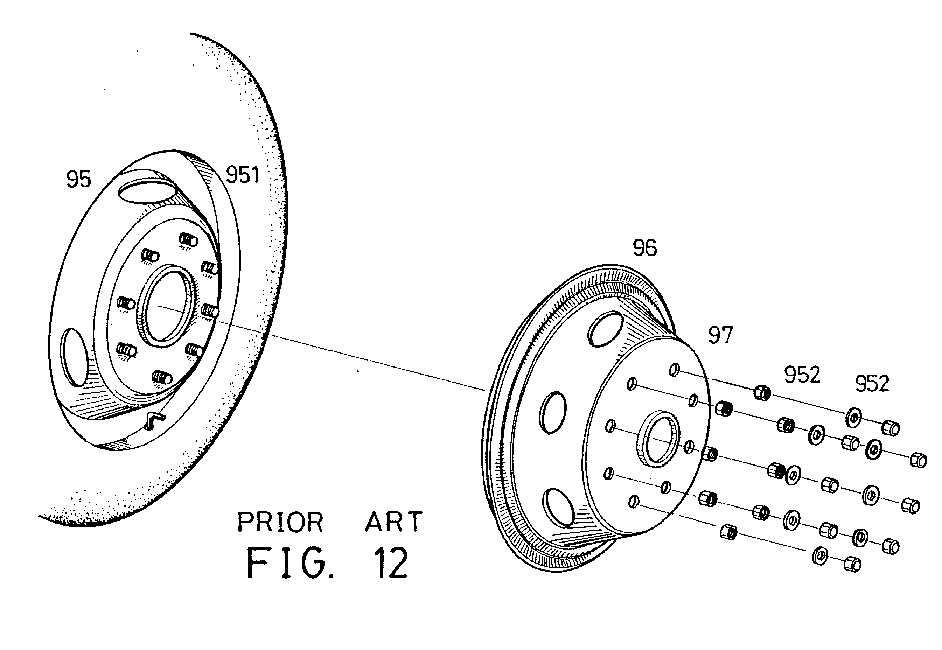

Referring to FIG. 12, the mounting of a front wheel cap 96 onto a front wheel body 95 in conventional manner requires that the car body be elevated such that the tyre is raised above the ground so that all nuts 952 can be loosened. Then the circular openings 97 of the front wheel cap 96 are placed in alignment with the screws 951 on the front wheel body 95, and finally the front wheel body 95 and the front wheel cap 96 are combined by means of nuts 952. Each nut 952 should be forcibly fastened and a nut cover 953 added on to further ensure the engagement.

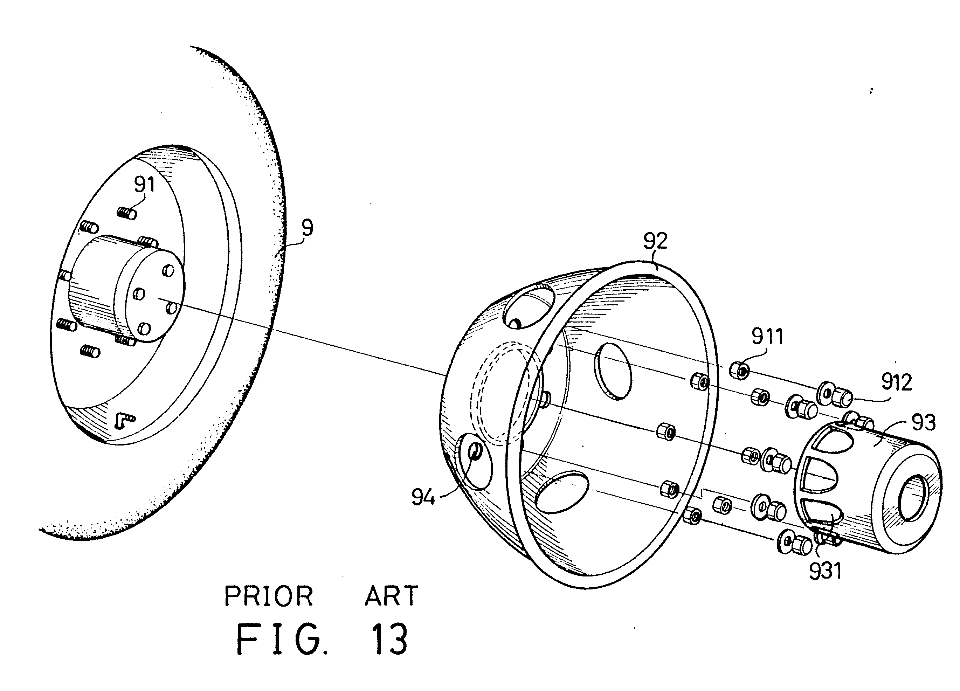

Referring to FIG. 13, similarly, to mount a rear wheel cap 92 onto a rear wheel body 9 in conventional manner requires that the car body be elevated such that the tyre is raised above the ground so that all nuts 911 can be loosened. Then the circular openings 94 of the rear wheel cap 92 are placed in alignment with the screws 91 on the rear wheel body 9, and finally the rear wheel body 9 and the rear wheel cap 92 are combined by means of nuts 911. Each nut 911 should be forcibly fastened and a nut cover 912 should be added on to further ensure the engagement. During screwing procedures, the range of motion a wrench may be blocked by the rear hub cap 93, and therefore, the rear hub cap 93 is provided with openings at lateral side thereof to facilitate the screw-up procedures of those screws 911.

The drawbacks of the conventional fixing manner of wheel caps are summarized as follows:

1. The mounting of a wheel cap onto a wheel body in conventional manner requires that the car body be elevated such that the tyre is raised above the ground so that all nuts can be loosened. Then the circular openings of the wheel cap are placed in alignment with the screws on the wheel body, and finally the wheel body and the wheel cap are combined by means of nuts. Each nut should be forcibly fastened and a nut cover added on to further ensure the engagement. Such mounting method is very inconvenient and requires much effort.

2. The actual size or dimension of the wheel body may vary slightly with respect to manufactures even though labelled the same size. The conventional mounting method requires the wheel caps be fitted snugly against the wheel body. Should there be any discrepancy in dimension between the wheel body and the wheel cap, a slit will exist therebetween, and so there will exist a danger of detachment when the vehicle is overloaded.

3. The surface of the rear wheel cap is designed to leave an arcuate hole so that the socket wrench has ample range of motion for tightening the nut when fixing the rear wheel cap onto the rear wheel body. Even though the arcuate hole may sometimes cause injury to the workman during the assembly and disassembly, if no arcuate hole of sufficient size is left in the rear wheel cap, the socket wrench may not be able to make contact with the bolt so as to fasten the same thereto.

This invention has arisen in seeking to mitigate and/or obviate the above-mentioned drawbacks of the conventional fastening manner.

This invention is therefore intended to provide a fastening bracket which provides better engagement of the wheel cap with the wheel body.

This invention is further intended to provide a short U-shaped bracket for a front wheel body and a long U-shaped bracket for a rear wheel body to ensure better engagement of the wheel caps with respective wheel bodies.

This invention is further intended to provide a fastening bracket which is capable of assuring convenient and yet dependable fixing without detaching the nuts from the wheel body while the fastening bracket can be combined with the nuts already fixed in the wheel body.

This invention is further intended to provide a fastening bracket which assures rigid engagement of the wheel cap and the wheel body regardless of the size of the wheel body.

This invention is further intended to provide a fastening bracket which does not require an arcuate hole be left on the surface of the rear wheel cap so that the socket wrench has ample range of motion for tightening the nut when fixing the rear wheel cap onto the rear wheel body, so that the method of assembly guards the safety of the workman.

These and other features and advantages of this invention will be apparent to one having ordinary skill from a careful reading of the description provided hereinbelow, with appropriate reference to the attached drawings.

In the drawings:

FIG. 1 is a perspective view of a front fastening bracket in accordance with this invention, showing the intended combination of a front wheel cap with a front wheel body;

FIG. 2 is a sectional view showing the combination of the front wheel cap with the front wheel body by means of the front fastening bracket of FIG. 1;

FIG. 3 is a perspective view of a rear fastening bracket in accordance with this invention, showing the intended combination of a rear wheel cap with a rear wheel body;

FIG. 4 is a sectional view showing the combination of the rear wheel cap with the rear wheel body by means of the rear fastening bracket of FIG. 3;

FIG. 5 is a perspective view of a wrench used with this invention;

FIG. 6 shows another embodiment of the front fastening bracket;

FIG. 7 shows yet another embodiment of the front fastening bracket;

FIG. 8 shows another embodiment of the rear fastening bracket;

FIG. 9 shows yet another embodiment of the rear fastening bracket;

FIG. 10 is a sectional view showing the combination of the front wheel cap and the front fastening bracket;

FIG. 11 is a sectional view showing the combination of the rear wheel cap and the rear fastening bracket;

FIG. 12 shows a front wheel cap and a front wheel body combined by the conventional fixing manner;

FIG. 13 shows a rear wheel cap and a rear wheel body combined by the conventional fixing manner;

FIG. 14 is an exploded view showing an embodiment of the fastening bracket; and

FIG. 15 is a view showing the embodiment of the fastening bracket of FIG. 14 after assembly.

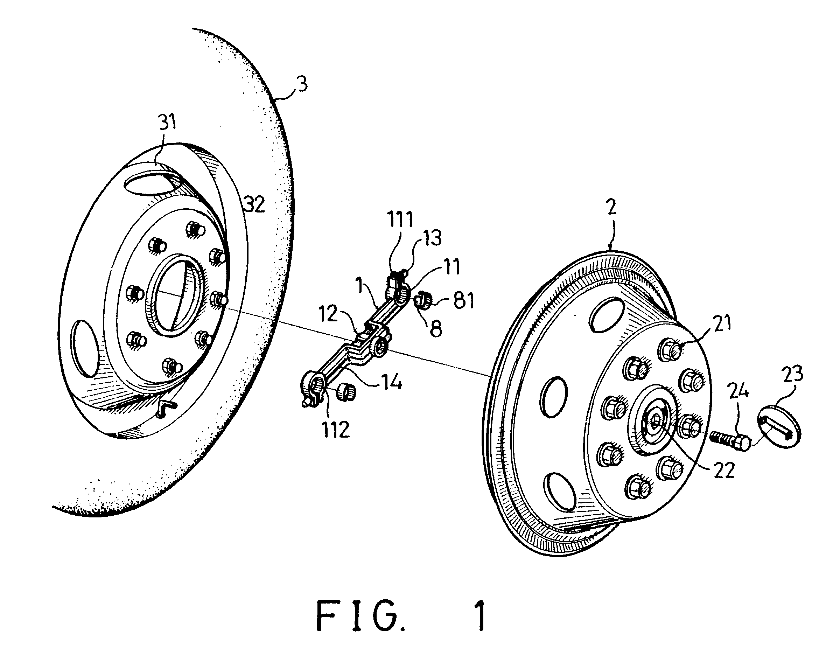

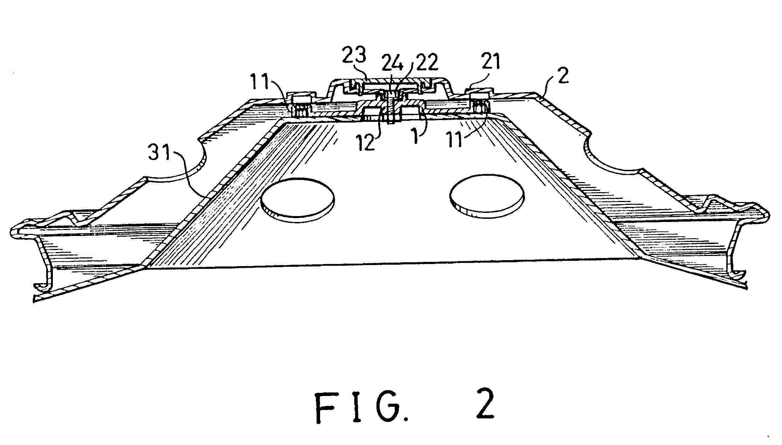

Referring to the drawings and initially to FIGS. 1 and 2, it can be seen that a front fastening bracket is designated by the reference numeral 1. The front fastening bracket 1 comprises a locking seat 12 having screw threading thereon at a central surface with an adjustable locking ring 11 at each end thereof. Each adjustable locking ring 11 has a projection 111. Also, the inner surface of each adjustable locking ring 11 is formed with protruded strip 112 to ensure rigid engagement with nuts. The projection 111 includes two holes though which the hexagonal screws 13 are passable in order to adjust or control the tightness of the adjustable locking ring 11. Also, the front fastening bracket 1 is formed with a brace strip 14 to reinforce the structure thereof.

During assembly, the adjustable locking ring 11 of the front fastening bracket 1 is placed onto the bolt 32 of the front wheel body 31, then the hexagonal screw 13 passed through the projection 111 of the adjustable locking ring 11 such that the adjustable locking ring 11 firmly engages with the bolt 32 so as to fix the locking seat 12 onto the front wheel body 31. If the size of the bolt 32 is slightly smaller than usual, the adjustable locking ring 11 can be further tightened or a C-shaped pad 8 having protruded strip 81 on its inner face be used to compensate. There is therefore no need to change the fastening bracket.

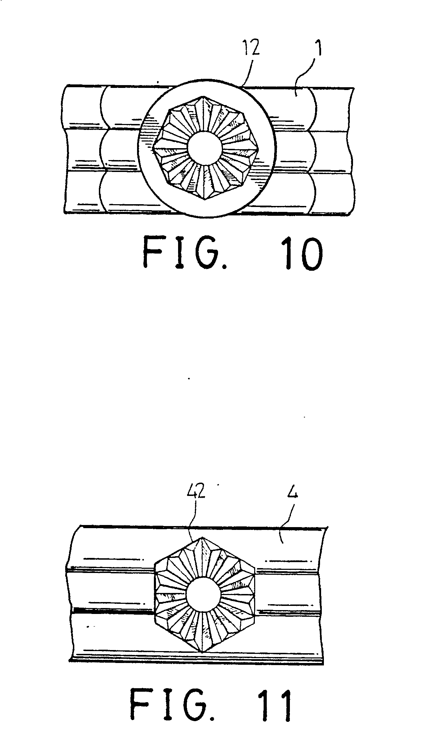

It should be noted that the base portion of a circular opening 22 of a front wheel cap 2 is serrated in shape, and, as can be seen in FIG. 10, the inner portion of the locking seat 12 of the front fastening bracket 1 is also serrated in shape, in order to provide for a better engagement between the two once assembled. During assembly, a screw 24 passes through the circular opening 22 of the front wheel cap 2 and is further combined with the locking seat 12 of the front fastening bracket 1. A protective cover 23 having four pointed protrusions 231 thereon is used to cover the small hole 251 on the surface of the wheel cap 2 for protecting the screw 24.

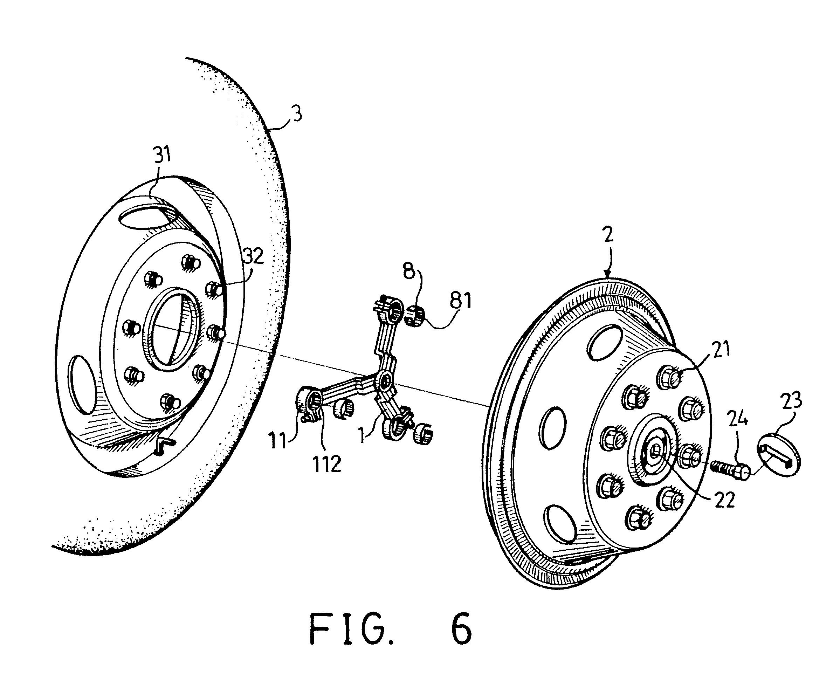

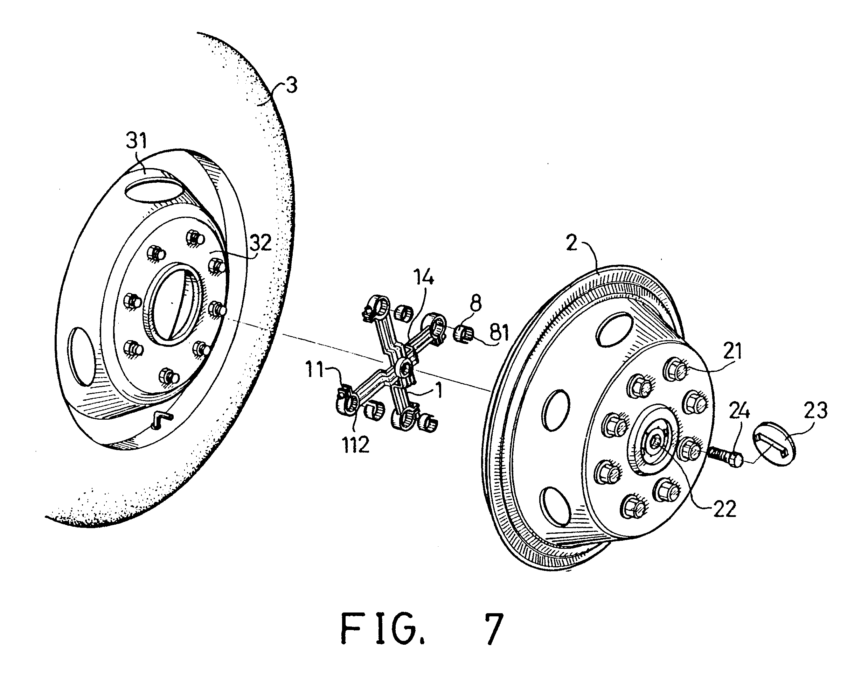

The front fastening bracket 1 as shown in FIG. 1 has two arms. In fact, it can be designed in three-arm form, as in FIG. 6, or four-arm form, as in FIG. 7, to meet the actual requirements.

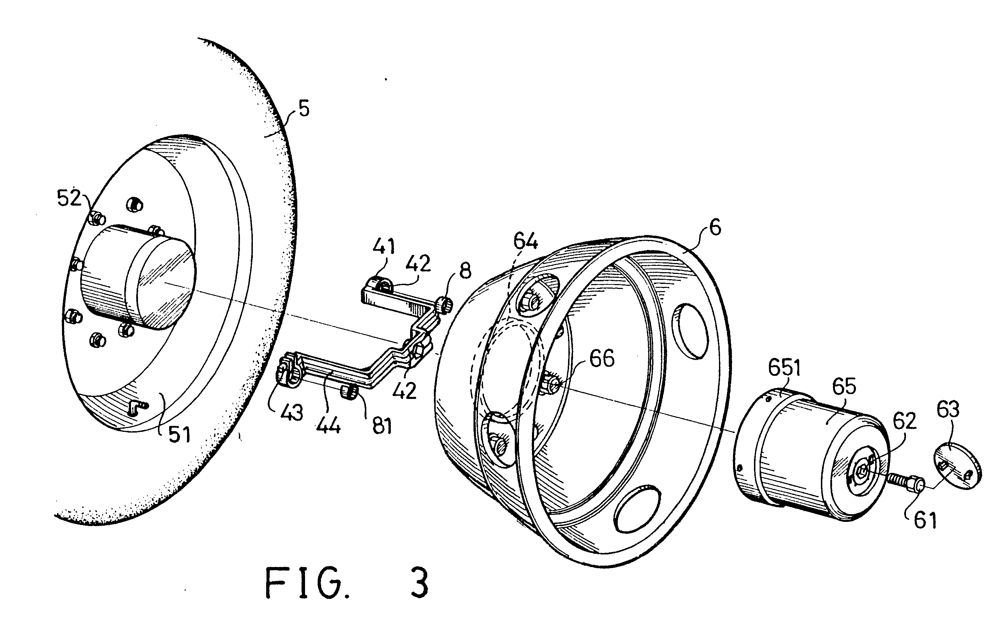

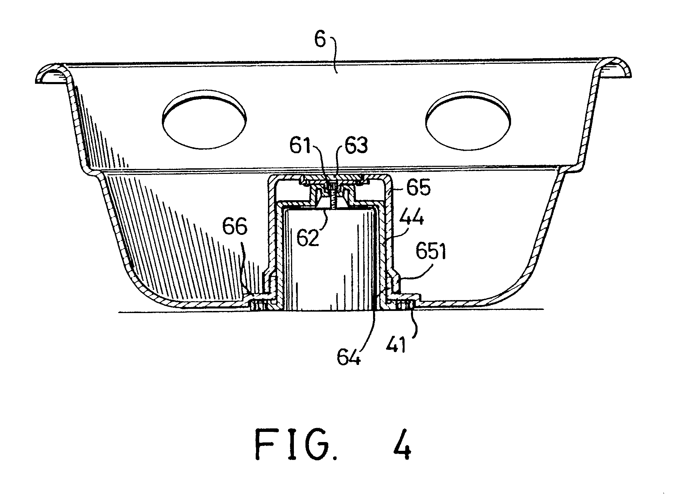

Referring next to FIGS. 3, 4 and 5, it can be seen that a rear fastening bracket is designated by the reference numeral 4. The rear fastening bracket 4 is substantially the same as the front fastening bracket 1, except that each arm thereof is longer. The rear fastening bracket 4 comprises a locking seat 42 having screw threading thereon at a central surface with an adjustable locking ring 41 at each end thereof. Each adjustable locking ring 41 has a projection 411. Also, the inner surface of each adjustable locking ring 41 is formed with protruded strip 412 to ensure rigid engagement with nuts. The projection 411 includes two holes through which the hexagonal screws 43 are passable in order to adjust or control the tightness of the adjustable locking ring 41. The rear fastening bracket 4 has a brace strip 44 to reinforce the structure thereof.

During assembly, the adjustable locking ring 41 of the rear fastening bracket 4 is placed onto the bolt 52 of the rear wheel body 51 such that the bolt 52 is connectable in the bolt shell 66. A wheel axle cover 65 having a flange 651 is mounted onto the rear wheel body 51 by means of a screw 61 which passes through the circular opening 62 and is fixed in the locking seat 42 of the rear fastening bracket 4. Then the flange 651 thereof is fixed to the flange 64 of the rear wheel cap 6.

It should be noted that the base portion of a circular opening 62 of a rear axle cover 65 is serrated in shape, and, as can be seen in FIG. 11, the inner portion of the locking seat 42 of the rear fastening bracket 4 is also serrated in shape, in order to ensure a better engagement between the two once assembled. In mounting the wheel axle cover 65 onto the wheel cap 6, the wheel axle cover 65 is fixed by means of a protective cover 63, which protective cover 63 is formed with protrusions 631 to engage with the small hole 651 of the wheel axle cover 65.

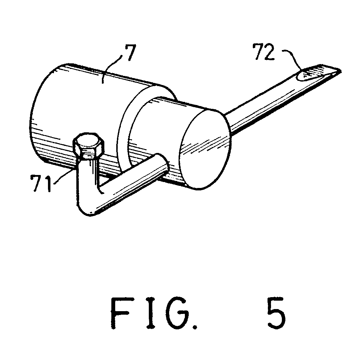

To dismount the protective cover 63 simply requires the use of a flat head 72 of a wrench 7 as shown in FIG. 5.

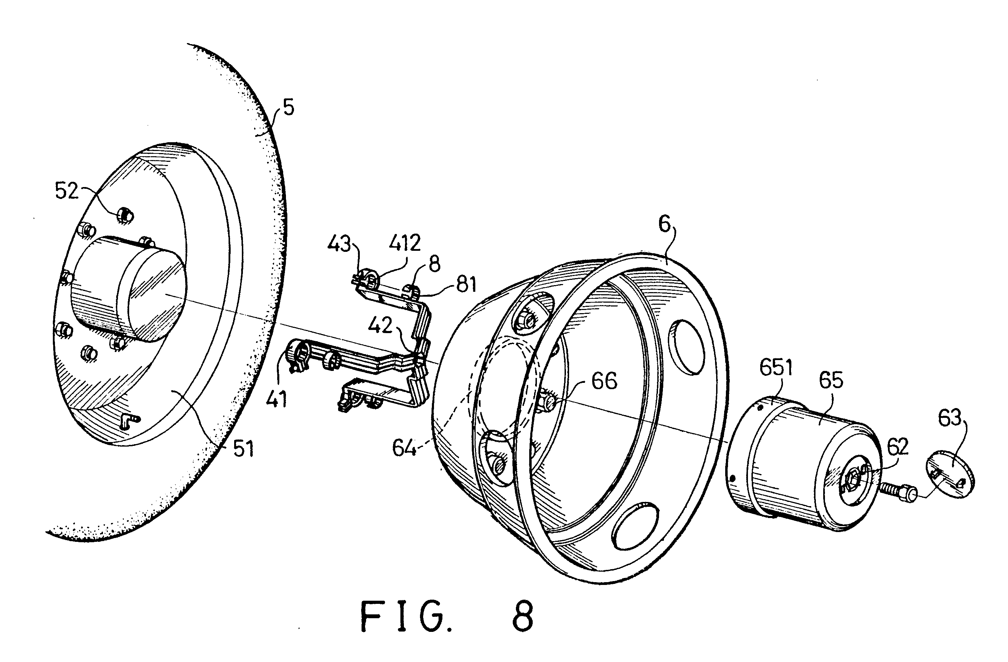

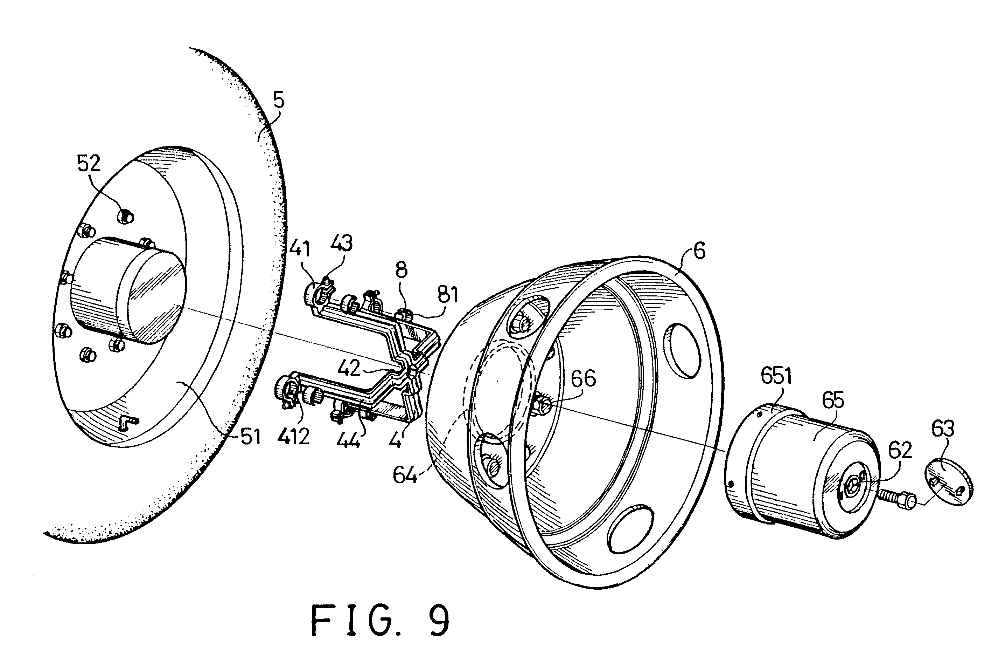

The rear fastening bracket 4 as shown in FIG. 3 has two arms. In fact, it can be designed in three-arm form, as in FIG. 8, or four-arm form, as in FIG. 9, to meet the actual need.

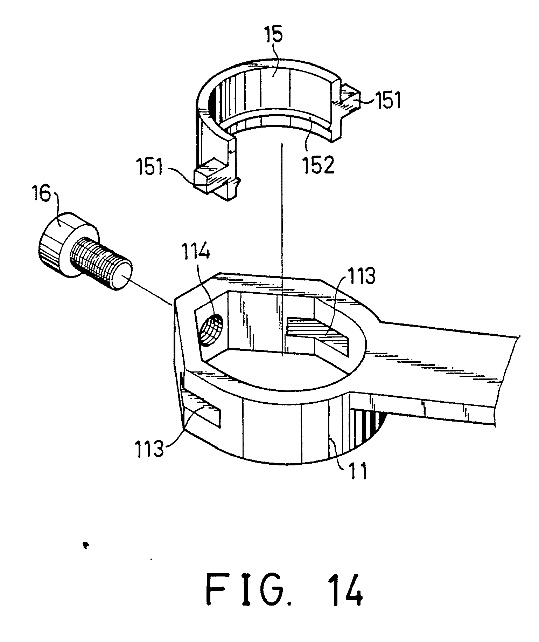

FIG. 14, then, depicts an embodiment of the locking ring which can be adapted in the structure of both of the front and rear fastening brackets 1 and 4. In this embodiment, the locking ring 11 is constructed in a closed-ring configuration with both lateral sides respectively thereof provided with a sliding groove 113, while an end part thereof provided with a screw hole 114. A crescent-shaped resilient blade 15, having an offset block 151 at both outer ends thereof and a rib 152 on an inner surface thereof, is placed within the region defined by the closed-ring structure with the offset blocks 151 respectively fixed in the sliding grooves 113. The crescent-shaped resilient blade 15 is adjustable within the locking ring 11. A screw 16 is fixable to the screw hole 114 for urging the crescent-shaped resilient blade 15 to adjust its position in order to adjust the size of the locking ring 11.

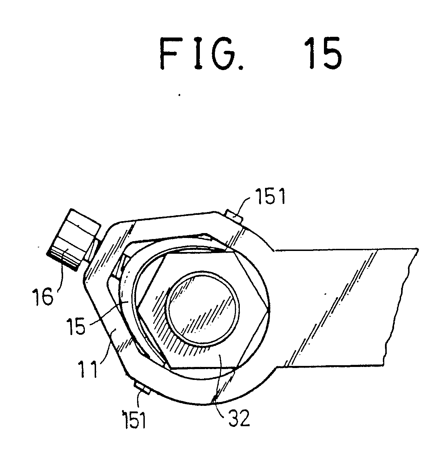

Referring next to FIG. 15, the locking ring 11 is fittable and lockable around the bolt 32 of the wheel body. If the bolt 32 is undersized, the screw 16 can be adjusted to compress the crescent-shaped resilient blade 15 and accordingly secure the bolt 32 against any free movement.

This embodiment of the locking ring is applicable to the fastening brackets of not only the two-arm form but also the three-arm form and four-arm form.

While the invention has been described in relation to its preferred embodiment, it is to be understood that numerous modifications, alterations and alternate embodiments may be contemplated by those skilled in the art upon reading this specification. It is envisioned that all such alternate embodiments are considered to be within the scope of the present invention as defined by the appended claims.

## Claims

1. A fastening bracket for a wheel cap comprising a locking seat (12 or 42) having screw threading thereon at a central surface with a locking ring (11 or 41) at each end thereof, said fastening bracket (1 or 4) being formed with a brace strip (14 or 44) to reinforce the structure thereof.

2. A fastening bracket as claimed in claim 1, wherein each locking ring (11 or 41) has a projection (111 or 411) and is formed with protruded strips (112 or 412) at an inner surface thereof to ensure rigid engagement with nuts.

3. A fastening bracket as claimed in claim 2, wherein said projection (111 or 411) includes two holes for hexagonal screws to pass therethrough so as to adjust or control the tightness of the locking ring (11 or 41).

4. A fastening bracket as claimed in claim 1, wherein each locking ring (11 or 41) is constructed in a closed-ring configuration with both lateral sides thereof respectively provided with a sliding groove (113 or 413) while an end part thereof is provided with a screw hole (114 or 414), and wherein a crescent-shaped resilient blade (15 or 45), having an offset block (151 or 451) at both outer ends thereof and a rib (152 or 452) on an inner surface thereof, is located within the region defined by the closed-ring structure with the offset blocks (151 or 452) of the crescent-shaped blade (15 or 45) respectively fixed in the sliding grooves (113 or 413), and wherein a screw (16 or 46) is fixable in the screw hole (114 or 414) for urging the crescent-shaped resilient blade (15 or 45) so as to adjust the position of the crescent-shaped resilient blade (15 or 45) in order to adjust the size of the locking ring (11 or 41).

5. A front fastening bracket (1) for wheel cap comprising a locking seat (12) having screw threading thereon at a central surface with a locking ring (11) at each end thereof, each locking ring (11) having a projection (111) and formed with protruded strips (112) at an inner surface thereof to ensure rigid engagement with nuts, said projection (111) including two holes for hexagonal screws to pass therethrough so as to adjust or control the tightness of the locking ring (11), said fastening bracket (1) being formed with a brace strip (14) to reinforce the structure thereof.

6. A fastening bracket as claimed in claim 1, wherein each locking ring (11) has a projection (111) and is formed with protruded strips (112) on an inner surface thereof to ensure rigid engagement with nuts.

7. A fastening bracket as claimed in claim 2, wherein said projection (111) includes two holes for hexagonal screws to pass through so as to adjust or control the tightness of the locking ring (11).

8. A fastening bracket as claimed in claim 1, wherein each locking ring (11) is constructed in a closed-ring configuration with both lateral sides thereof provided with a respectively sliding groove (113) and an end part thereof provided with a screw hole (114), and wherein a crescent-shaped resilient blade (15), having an offset block (151) at both outer ends thereof and a rib (152) on an inner surface thereof, is placed within the region defined by the closed-ring structure with the offset blocks (151) of the crescent-shaped blade (15) respectively fixed in the sliding grooves (113), and wherein a screw (16) is fixable in the screw hole (114) for urging the crescent-shaped resilient blade (15) to adjust the position of the crescent-shaped resilient blade (15) in order to adjust the size of the locking ring (11).

9. A fastening bracket (4) for wheel cap comprising a locking seat (42) having screw threading thereon at a central surface with a locking ring (41) at each end thereof, each locking ring (41) having a projection (411) and formed with protruded strips (412) at an inner surface thereof to ensure rigid engagement with nuts, said projection (411) including two holes for hexagonal screws to pass therethrough so as to adjust or control the tightness of the locking ring (41), said fastening bracket (4) being formed with a brace strip (44) to reinforce the structure thereof.

10. A fastening bracket as claimed in claim 1, wherein each locking ring (41) has a projection (411) and formed with protruded strip (412) at an inner surface thereof to ensure rigid engagement with nuts.

11. A fastening bracket as claimed in claim 2, wherein said projection (411) includes two holes for hexagonal screws to pass through so as to adjust or control the tightness of the locking ring (41).

12. A fastening bracket as claimed in claim 1, wherein each locking ring (41) is constructed in a a closed-ring configuration with both lateral sides thereof provided with a sliding groove (413) respectively while an end part thereof provided with a screw hole (414), and wherein a crescent-shaped resilient blade (45), having an offset block (451) at both outer ends thereof and a rib (452) on an inner surface thereof, is placed within the region defined by the closed-ring structure with the offset blocks (451) of the crescent-shaped blade (45) respectively fixed in the sliding grooves (413), and wherein a screw (46) is fixable in the screw hole (414) for urging the crescent-shaped resilient blade (45) so as to adjust the position of the crescent-shaped resilient blade (45) in order to adjust the size of the locking ring (41).

13. A fastening bracket as claimed in claim 1 which includes two arms.

14. A fastening bracket as claimed in claim 1 which includes three arms.

15. A fastening bracket as claimed in claim 1 which includes four arms.

FIG. 1

FIG. 2

EP 0 421 000 A1

FIG. 3

FIG. 4

EP 0 421 000 A1

FIG. 5

FIG. 6

FIG. 7

FIG. 8

FIG. 9

FIG. 10

FIG. 11

95 951 96

97

952 952

PRIOR ART
FIG. 12

EP 0 421 000 A1

PRIOR ART
FIG. 13

EP 0 421 000 A1

FIG. 14

EP 0 421 000 A1

# FIG. 15

19

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3287067 (BROWN) <br> * column 1, line 55 – column 2, line 7; figures 1-4 * | 1, 2, 3, 5, 6, 14 | B60B7/14 <br> F16B2/06 |
| Y | DE-A-2736149 (ROBERT BOSCH) <br> * page 5, line 23 – page 6, line 8; figure 2 * | 1, 2, 3, 5, 6, 14 | |
| A | US-A-4346940 (TATAR) <br> * column 2, line 45 – column 3, line 46; figures 1-3b * | 1, 13 | |
| A | US-A-2443760 (ARRISON) <br> * column 3, lines 36 – 57; figures 7, 8 * | 1, 4 | |

TECHNICAL FIELDS SEARCHED (Int. Cl.5)

B60B
F16B

The present search report has been drawn up for all claims

| Place of search | Date of completion of the search | Examiner |
|---|---|---|
| THE HAGUE | 06 JUNE 1990 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document